Europäisches Patentamt

European Patent Office

Office européen des brevets

(11) Publication number: **0 142 726**
**B1**

## (12) EUROPEAN PATENT SPECIFICATION

(45) Date of publication of patent specification: **04.07.90**

(21) Application number: **84112664.2**

(22) Date of filing: **19.10.84**

(51) Int. Cl.⁵: **B 65 G 17/12**

(54) **Elevating chain conveyor.**

(30) Priority: **20.10.83 US 543854**

(43) Date of publication of application:
**29.05.85 Bulletin 85/22**

(45) Publication of the grant of the patent:
**04.07.90 Bulletin 90/27**

(84) Designated Contracting States:
**AT BE CH DE FR GB IT LI LU NL SE**

(56) References cited:
**FR-A-2 131 853**
**US-A-3 184 039**

(73) Proprietor: **Franke, Walter**
**39557 Platera**
**Fremont California 94539 (US)**

(72) Inventor: **Franke, Walter**
**39557 Platera**
**Fremont California 94539 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Summary of the invention

Many conveyors have been proposed wherein a series of carrier members are supported from opposite ends on two endless chains wherein the sprockets for the endless chains are displaced substantially by the length of a carrier member during horizontal movement so that the carriers remain horizontal regardless of whether they are moving horizontally or vertically.

The main problem with such conveyors in the past has been that in order to provide clearance when going from a vertical to horizontal path or vice versa, it is ordinarily necessary that the carriers be separated by some distance in order to provide clearance when, for instance, one carrier moves up and another carrier moves under it.

One reference particularly of note is French Patent No. 2,131,853. This reference which corresponds to the preamble of claim 1 discloses a conveyor for moving articles from one level to another as well as in a horizontal path. It discloses a plurality of support elements which extend from one side to the other of the path to form a carrier. Unique to this patent are pliable slabs connected to the same chains which connect to and move a trailing edge of a flexible platform. The slabs are not contiguous with the platforms and are formed by separator transverse rods which, among themselves are not contiguous. The rods connect with the same chains as do the trailing ends of the carriers. If the carrier direction is reversed for elevating, the slabs trail the carrier on the vertical run. Thus, the reference fails to teach slabs that move with and form a lip on the front end of the platform. Further, the French reference shows that the leading one of the rods is not contiguous with the flexible platform which it follows and the trailing one of the rods is not contiguous with the flexible platform which follows it. Thus, the slabs lack continuity to provide a continuous surface among themselves and fail to form a continuous surface with the adjacent platforms.

Such conveyors as discussed above are not suitable for use with continuous loading devices since articles would fall between and off of the carriers if they were merely pushed onto the conveyor line without regard to the position of the carriers. The present invention attempts to overcome these disadvantages by providing a carrier with a continuous surface and a front end lip. Specifically, in accordance with the present invention, separators are provided between the carriers, the separators serving two different purposes. In the first place, the separators provide a continuous surface completely without gaps, as the carriers are moved along a horizontal path. In the second place, as articles are loaded onto the continuously moving conveyor, some will land on the separators. Now as the path is changed from horizontal to vertical, the separators will slowly articulate upwardly, pushing the articles back onto the carrier. This employment of the separators between carriers also permits one to convey articles off of the conveyor onto a stationary or moving platform without the possibility of the articles falling back down the shaft.

Another advantage of the present invention is that an endless belt can be used to discharge articles on the continuous conveyor, wherein the endless belt is narrower than the carriers so that, after the articles move onto a carrier, they can move out to the sides. This is possible since the carriers have upstanding sides which prevent articles from moving off of the carriers at the sides.

Such conveyors as have been used in the past have been suitable primarily for use with relatively large articles but the conveyor of the present invention is particularly adapted for moving small articles, although the articles can be of almost any size, including metal cans, glass bottles or jars, plastic containers, boxes of almost any size, bags such as flour, sugar or the like, round containers or odd shapes such as square or triangular containers, suitcases and the like.

Another advantage of the present invention is that the carriers are articulated so that the carriers can pass around a shaft after discharging their contents and move in a vertical path so that the conveyor of the present invention can be made very compact.

Another advantage of the invention is that the conveyor may be used in various combinations of vertical and horizontal paths so that it can be used to lower articles, to raise articles over an obstacle, to raise articles or to start at one level, move to another level and finally move to a third level which may be lower or higher than the first level.

Accordingly, there is provided a conveyor for moving articles from one level to another as well as in a horizontal path, said conveyor comprising in combination first and second pairs of endless chains arranged on a plurality of sprockets around a path including horizontal and vertical runs, with one of each pair of chains being on one side of said path and the other of each pair of chains being on the opposite side of said path; plural spaced-apart continuous-surface articulated carrier; first support means extending from one side of the path to the other for supporting a respective first end of each of said continuous-surface carriers, the opposite ends of each of said first support means being each connected to a respective one of said first pair of endless chains; at least one separator element having a continuous surface extending across said path with opposite ends thereof being supported by said first pair of chains to form an articulated separator; and second support means extending from one side of the path to the other for supporting a respective second end of each of said continuous-surface articulated carriers, the opposite ends of each of said second support means being each connected to a respective one of said second pair of endless chains, said second support means extending across said path, the arrangement being such that when the chains on each side of said path lie adjacent one another,

2

adjacent ones of said continuous-surface carriers are substantially coplanar with each other and with respect to the separator and second support means therefor, said separators also serving as an abutment when the chains are separate from each other and the carriers are one above another and parallel with each other, said conveyor being characterized in that each continuous-surface carrier comprising a plurality of contiguous support members extending from one side of the path to the other, each plurality of contiguous support members combining to form a continuous surface articulated carrier which is rigid to support a load when the carrier is supported from its ends, said separator element having a continuous surface and being contiguous with the leading first end of each respective carrier, said support means being contiguous with said carrier, the space between each adjacent pair of said spaced-apart coplanar carriers being filled with a respective pair of said separator elements and second support means, the contiguous continuous surfaces of all said carriers, separators and support means thus providing a continuous surface when said chains lie adjacent one another, whereby articles transported by said spaced-apart carriers cannot fall therebetween, said separators and said second support means serving to provide with said carriers a continuous surface when the respective chains lie adjacent one another.

The dependent claims concern particular embodiments of the invention.

Various other features and advantages of the invention will be brought out in the balance of the specification.

Brief description of the drawings

Figure 1 is a perspective view of a conveyor embodying the present invention.

Figure 2 is an enlarged partial side view of a portion of the conveyor shown in Figure 1.

Figure 3 is a plan view of one of the articulated carriers.

Figure 4 is a plan view of a carrier unit showing the method of attachment to the drive chains.

Figure 5 is a partial elevation view.

Figure 6 is a partial section on the line 6-6 of Figure 2.

Figure 7 is a partial section on the line 7-7 of Figure 5.

Figure 8 is a perspective view of a portion of the conveyor shown a timing mechanism for loading the carriers upon a conveyor.

Description of a preferred embodiment

Referring to the drawings of reference characters, the conveyor of the present invention includes a plurality of carriers generally designated 10 and a series of separator elements generally designated 12 which are carried on two pairs of chains. The first or outer pair of chains designated 14 and 16 are attached to the rear of a carrier by the cross member 18 while a second or inner pair of chains designated 20 and 22 carry the front end of the carrier. Separator elements 12 are also connected between the second chains 20 and 22. The first set of chains are trained around a first set of sprockets such as 24, 24A, 26, 26A, 27A and 28A while the second set of chains is trained around a second set of sprockets such as 30, 30A, 32, 34 and 36. At those points on the path of travel where the two chains follow the same path, sprockets for the two chains can be on the same shaft. Thus, sprockets 34 and 27 are affixed to the shaft 40 which is driven from a motor or other prime mover 42. Similarly, sprockets 28A and 36 are mounted on shaft 44.

The separator elements 12 are mounted between chains 20 and 22 in the forward direction of travel. Three such elements are illustrated, although a fewer or larger number could be employed. The leading edge of the carrier elements 10 are mounted between separator elements 12 and connected to the chains 20 and 22. The trailing edge of each carrier is mounted on cross bar 18, later described in detail.

During a horizontal run of the conveyor, the sprockets for the two chains are on a horizontal plane. For instance, sprockets 24 and 30 occupy the same horizontal plane as do sprockets 26, 32, 34 and 27. During a change in vertical direction wherein the carriers are loaded, the sprockets for the two chains are separated by the length of a carrier. Thus, sprockets 24 and 30 are separated in a horizontal dimension by the length of a carrier 10 as are the sprockets 26 and 32. After the carriers have been unloaded and it is desired to merely return them empty to the initial loading position, the sprockets can be mounted on the same shaft. Thus sprockets 27A and 34 are mounted on shaft 40, as previously described, while sprockets 28A and 36 are mounted on shaft 44, almost directly below. Thus both the carriers and separators move along a vertical path. This substantially reduces the space which the conveyor occupies since the vertical journey is made with all of the elements between the chains in a flattened condition. At all times the ends of the carriers are supported on the pitch line of the chains.

The separator bars which were generally designated as 12 are merely bars which extend from one side to the other typified (see Fig. 4) by bar 46 mounted on shaft 48, the two ends of the shaft being attached to the chains 20 and 22. In the embodiment illustrated, three of the separator bars have been employed but it will be obvious that a fewer or larger number could be used.

The carrier members themselves which have been generally designated as 10 are composed of a special leaf-type chain which is adapted to be bent in one direction and not the other. Thus, the carrier, when supported from the ends, will support a load placed in the middle, yet if an upward force is provided at the middle, it will bend freely. This structure is best seen in Figs. 3, 4 and 6 where a typical cross member 50 has a stair step configuration which interlocks with adjoining members 52 and 54. Each of the members is mounted on two adjacent shafts, typical shafts being designated 56, 58, and 60. Each shaft interlocks two adjacent cross members so that shaft 56 passes through both the member 52 and the member 50. Similarly, the shaft 58 passes through the member 50 as well as 54. The cross members are relieved as at 62 and 64. This provides a flexible structure so that the pallet can bend in an upward direction.

In order to provide a load supporting structure, interlocking side members are employed. These upstanding side members interlock in such a manner that the pallet will support a load when supported at the ends but will bend freely in the opposite direction. Referring specifically to Fig. 4, the side member 66 bridges shafts 56 and 58 while member 68 bridges shafts 58 and 60. Each of the side members thus embraces two adjacent shafts and each shaft has two side members there on in staggered relationship. Thus, the side members in their interlocking relationship allow what is essentially a chain to flex freely in one dimension and become rigid in the other dimension. The leading edge of the carrier 10 is affixed to shaft 70 which in turn is attached to opposite ends to the chains 20 and 22. The trailing edge of the carrier 10 is attached to a shaft 72 which is connected to a cross member 18. The members 18 have U-shaped ends 19 enabling the member to pass over the inner sprockets, e.g. 32. Members 18 are connected to two adjacent links in the drive chains 14 and 16 for additional strength.

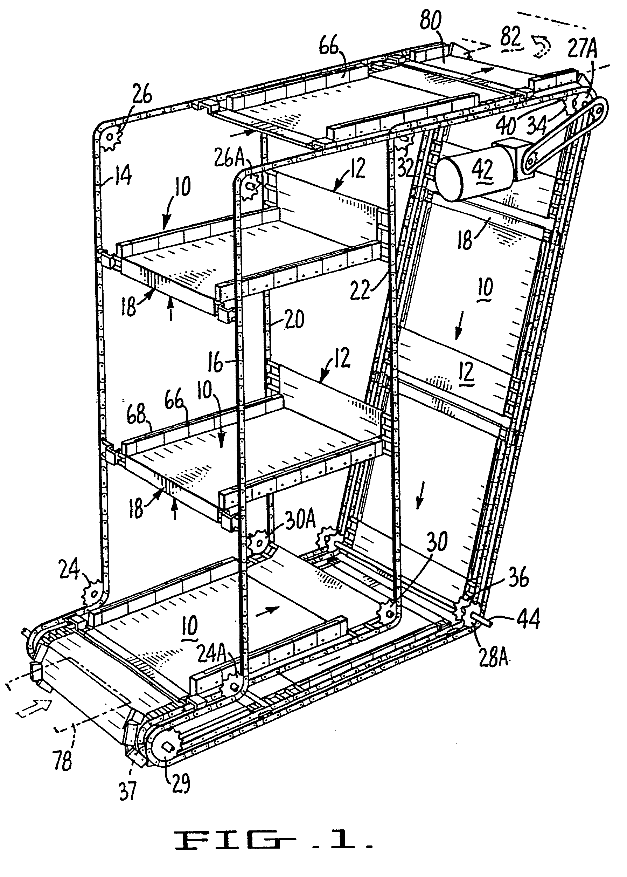

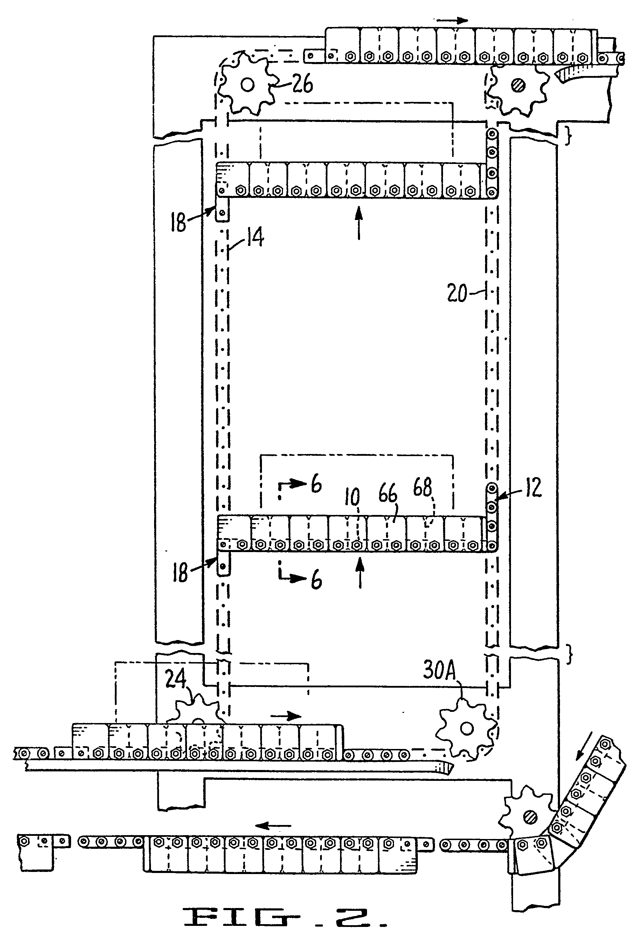

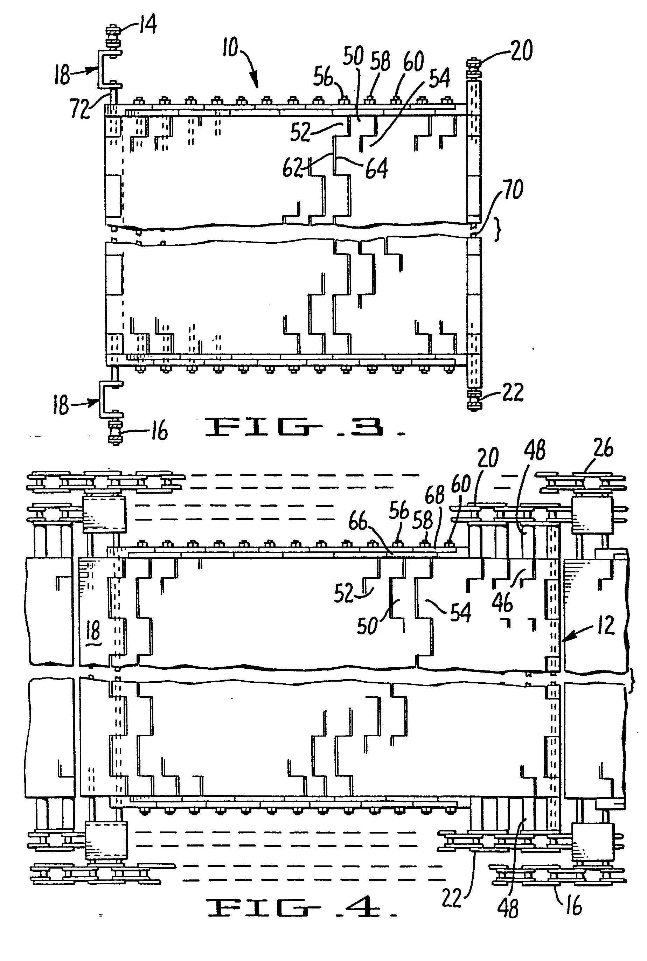

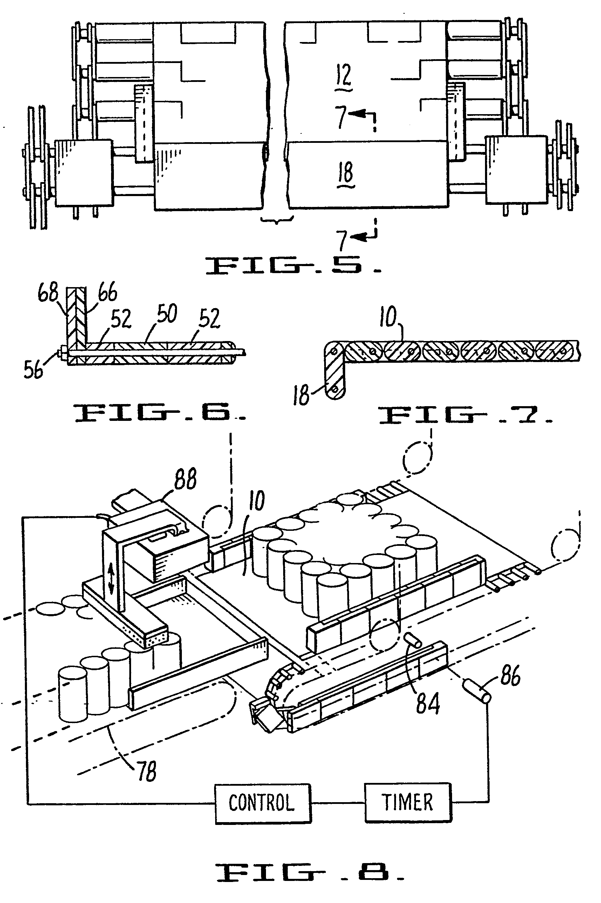

As can best be seen from Figures 1 and 2, when the conveyor is moving in a horizontal plane, there is no gap between adjacent sections. Normally the feed point, shown in phantom in Figure 1, is narrower than the width of the conveyor so that if goods are delivered onto the conveyor, they will spread sideways to fill the width of the conveyor. Thus, it will be seen that the feed point 78 is considerably narrower than any of the carriers 10. Also, it will be seen that there is no gap between adjacent sections so that no goods will fall off if they are delivered between carriers. Some of the goods will undoubtedly be delivered onto the separator elements 12 but, as the carrier moves forward, see the bottom carrier in Figure 1, the leading edge of the separator elements moves gently upwardly which would push any articles on the separator element back onto the carrier proper. Also, as the carrier moves upwardly, the separator element provides an effective front wall so that articles will not move off. It should also be noted that the side members, such as 66, which prevent the chain from flexing in the opposite direction, also serve as effective side barriers to hold articles onto the conveyor.

One of the features of the present invention is that it is easy to provide an unloading mechanism. Thus, referring to the upper righthand portion of Figure 1, a carrier 80 is shown discharging onto a transfer mechanism 82. As the carrier bends, the goods are transferred onto the conveyor 82.

Although loading can be continuous, under many circumstances it is desired to provide a timer so that the goods will be transferred onto the conveyor only at such times as a carrier is present and not between carriers. Thus, referring specifically to Figure 8, a photo-optical pair is provided by the light source 84 and pickup 86 and, when the light path is interrupted by the side members from the carrier, the timer and control actuate the release mechanism 88. Between carriers the light path is reestablished so that the control mechanism 88 cuts off the flow of material being loaded onto the carrier.

## Claims

1. A conveyor for moving articles from one level to another as well as in a horizontal path, said conveyor comprising in combination first (22, 20,) and second (14, 16) pairs of endless chains arranged on a plurality of sprockets (24, 24A, 26, 26A, 27A, 28A, 29, 34, 36) around a path including horizontal and vertical runs, with one of each pair of chains being on one side of said path and the other of each pair of chains being on the opposite side of said path; plural spaced-apart continuous-surface articulated carrier (10); first support means (70) extending from one side of the path to the other for supporting a respective first end of each of said continuous-surface carriers (10), the opposite ends of each of said first support means being each connected to a respective one of said first pair of endless chains (20, 22); at least one separator element (12) having a continuous surface extending across said path with opposite ends thereof being supported by said first pair of chains (20, 22) to form an articulated separator; and second support means (18) extending from one side of the path to the other for supporting a respective second end of each of said continuous-surface articulated carriers, the opposite ends of each of said second support means (18) being each connected to a respective one of said second pair of endless chains (14, 16), said second support means (18) extending across said path, the arrangement being such that when the chains on each side of said path lie adjacent one another, adjacent ones of said continuous-surface carriers are substantially coplanar with each other and with respect to the separator and second support means therefor, said separators (12) also serving as an abutment when the chains (14, 16, 20, 22) are separate from each other and the carriers (10) are one above another and parallel with each other, said conveyor being characterized in that each continuous-surface carrier comprising a plurality of contiguous support members extending from one side of the path to the other, each plurality of contiguous support members (50, 52, 54) combining to form a continuous surface articulated carrier (10) which is rigid to support a load when the carrier (10) is supported from its ends, said separator element (12) having a continuous surface and being contiguous with the leading first end of each respective carrier (10), said support means (70, 18) being contiguous with said carrier (10), the space between each adjacent pair of said spaced-apart coplanar carriers (10) being filled with a respective pair of said separator elements (12) and second support means (18), the contiguous continuous surfaces of all said carriers (10), separators (12) and support means (18) thus providing a continuous surface when said chains lie adjacent one another, whereby articles transported by said spaced-apart carriers (10) cannot fall therebetween, said separators (12) and said second support means (18) serving to provide with said carriers (10) a continuous surface when the respective chains (14, 16, 20, 22) lie adjacent one another.

2. The conveyor of claim 1 further characterized in that that carriers (10) are supported on the pitch line of the chains (14, 16, 20, 22).

3. The conveyor of any of the preceding claims further characterized in that the carriers (10) are composed of interlocking step-like support members (50, 52, 54) with rods (56, 58, 60) connecting each to adjacent members.

4. The structure of any of the preceding claims further characterized in that the carriers (10) have a double row of upstanding side plates (66, 68) each side plate being connected to two adjacent members (50, 52, 54) and each row being staggered with respect to the other and connecting to a pair of adjacent rods (56, 58, 60).

5. The conveyor for moving articles from one level to another in accordance with any of the preceding claims further characterized in that each of said separators (12) articulates upwardly out of the plane of each contiguous carrier (10) immediately prior to the vertical alignment of said contiguous carrier (10) with another of said carriers (10) whereby said separator (12) provides a front wall contiguous with the leading edge of each respective carrier (10) for restraining articles being transported by said carrier means (10).

6. A conveyor for moving articles from one level to another as well as in a horizontal path in accordance with any of the preceding claims further characterized in that adjacent ones of said plural spaced-apart carrier means (10) are vertically superposed for elevating articles when the respective chains (14, 16, 20, 22) of said first and second pairs are all vertical and spaced apart from each other.

7. A conveyor for moving articles from one level to another as well as in a horizontal path in accordance with claim 5 further characterized in that the respective separator (12) for each of said superposed carrier means (10) lies in a vertical plane contiguous with the respective first end of each of said carrier means (10) whereby each of said first support means (70) has the additional function of providing a continuous, contiguous front wall for restraining articles being transported by said carrier means (10).

8. A conveyor for moving articles from one level to another as well as in a horizontal path in accordance with claim 7 further characterized in that the respective second support means (18) for each said superposed carrier means (10) also lies in a vertical plane.

**Patentansprüche**

1. Förderer zum Bewegen von Gegenständen von einem Niveau auf ein anderes und auf einer horizontalen Bahn, wobei der Förderer in Kombination ein erstes (22, 20) und ein zweites (14, 16) Paar von endlosen Ketten aufweist, die auf einer Bahn mit horizontalen und vertikalen Strechen um eine Mehrzahl von Kettenrädern (24, 24A, 26, 26A, 27A, 28A, 29, 34, 36) herumgeführt sind, wobei eine Kette jedes Paares auf der einen Seite der genannten Bahn und die andere Kette jedes Paares auf der entgegengesetzten Seite der genannten Bahn angeordnet ist; ferner eine Mehrzahl von im Abstand voneinander angeordneten, je eine kontinuierliche Fläche bildenden, gelenkigen Trägern (10); eine erste Stützeinrichtung (70), die sich von einer Seite der Bahn zur anderen erstreckt und dazu dient, jeden der je eine kontinuierliche Fläche bildenden Träger (10) an einem zugeordneten ersten Ende abzustützen, während jede der ersten Stützeinrichtungen an ihren einander entgegengesetzten Enden mit je einer zugeordneten endlosen Kette (20, 22) des ersten Paares verbunden ist; ferner mit mindestens einem Trennelement (12), das eine kontinuierliche Fläche hat und sich quer über die genannte Bahn erstreckt und an seinen entgegengesetzten Enden an den Ketten (20, 22) des ersten Paares abgestützt ist und mit ihnen eine gelankige Trenneinrichtung bildet; und mit einer zweiten Stützeinrichtung (18), die sich von einer Seite der Bahn zur anderen erstreckt und dazu dient, jeden der je eine kontinuierliche Fläche bildenden, gelenkigen Träger an einem zugeordneten zweiten Ende desselben abzustützen, während jede der zweiten Stützeinrichtungen an ihren einander entgegengesetzten Enden mit je einer zugeordneten Kette (14, 16) des zweiten Paares darselben verbunden ist und die zweite Stützeinrichtung (18) sich quer über die genannte Bahn erstreckt, wobei die Anordnung derart ist, daß wenn die auf jeder Seite der Bahn angeordneten Ketten einander benachbart sind, einander benachbarte der je eine kontinuierliche Fläche bildenden Träger miteinander und mit der Trenneinrichtung und der zweiten Stützeinrichtung dafür im wesentlichen in einer Ebene liegen, wobei die genannten Trenneinrichtungen (12) ferner als Widerlager dienen, wenn die Ketten (14, 16, 20, 22) voneinander getrennt und die Träger (10) übereinander angeordnet und zueinander parallel sind, und der Förderer dadurch gekennzeichnet ist, daß jeder eine kontinuierliche Fläche bildende Träger eine Mehrzahl von aneinanderliegenden Stützgliedern (50, 52, 54) besitzt, die zusammen einen gelenkigen Träger (10) bilden, der eine kontinuierliche Fläche besitzt und der starr ist, so daß er eine Last abstützen kann, wenn der Träger (10) an seinen Enden abgestützt ist, wobei das Trennelement (12) eine kontinuierliche Fläche hat und an dem vorlaufenden ersten Ende des zugeordneten Trägers (10) anliegt, wobei die Stützeinrichtung (70, 18) an dem Träger (10) anliegt, der Zwischenraum zwischen den beiden im Abstand voneinander in einer Ebene liegenden Trägern (10) jedes Paares derselben von einem zugeordneten Paar der Trennelemente (12) und von der zweiten Stützeinrichtung (18) ausgefüllt ist, so daß die aneinanderliegenden kontinuierlichen Flächen aller der genannten Träger (10), Trenneinrichtungen (12) und Stützeinrichtungen (18) eine kontinuierliche Fläche bilden, wenn die Ketten einander benachbart sind und daher von den im Abstand voneinander angeordneten Trägern (10) transportierte Gegenstände nicht zwischen den Trägern herunterfallen können, wobei die Trenneinrichtungen (12) und die zweite Stützeinrichutng (18) dazu dienen, zusammen mit den Trägern (10) eine kontinuierliche Fläche zu bilden, wenn die zugeordneten Ketten (14, 16, 20, 22) einander benachbart sind.

2. Förderer nach einem der vorhergehenden Ansprüche, dadurch gekennzeichnet, daß die Träger (10) auf der Teillinie der Ketten (14, 16, 20, 22) abgestützt sind.

3. Förderer nach einem der vorhergehenden Ansprüche, dadurch gekennzeichnet, daß die Träger (10) aus formschlüssig ineinandergreifenden, stufenförmigen Stützliedern (50, 52, 54) zusammengesetzt sind, von denen jedes durch Stangen (56, 58, 60) mit benachbarten Gliedern verbunden ist.

4. Förderer nach einem der vorhergehenden Ansprüche, dadurch gekennzeichnet, daß die Träger (10) eine Doppelreihe von aufwärtsgerichteten Seitenplatten (66, 68) besitzen, jede Seitenplatte mit zwei benachbarten Gliedern (50, 52, 54) verbunden ist und jede Reihe gegenüber der anderen versetzt und mit einem Paar von benachbarten Stangen (56, 58, 60) verbunden ist.

5. Förderer zum Bewegen von Gegenständen von einem Niveau auf ein anderes nach einem der vorhergehenden Ansprüche, dadurch gekennzeichnet, daß jede der Trenneinrichtungen (12) aus der Ebene jedes ihn berührenden Trägers an jedem ihn berührenden Träger (10) derart angelenkt ist, daß die Trenneinrichtung (12) aus der Ebene des Trägers aufwärtsbewegbar ist, unmittelbar bevor der anliegende Träger (10) mit einem anderen der Träger (10) vertikal fluchtet, so daß die Trenneinrichtung (12) eine an dem vorlaufenden Rand jedes zugeordneten Trägers (10) anliegende Vorderwand als Anschlag für von dem Träger (10) transportierte Gegenstände bildet.

6. Förderer zum Bewegen von Gegenständen von einem Niveau auf ein anderes und auf einer horizontalen Bahn nach einem der vorhergehenden Ansprüche, dadurch gekennzeichnet, daß einander benachbarte der in einer Mehrzahl vorhandenen, im Abstand voneinander angeordneten Träger (10) vertikal übereinander angeordnet sind und zum Hochfördern von Gegenständen dienen, wenn die zugeordneten Ketten (14, 16, 20, 22) des ersten und des zweiten Paares alle vertikal und im Abstand voneinander angeordnet sind.

7. Förderer zum Bewegen von Gegenständen von einem Niveau auf ein anderes und auf einer horizontalen. Bahn nach Anspruch 6, dadurch gekennzeichnet, daß die jedem der übereinander angeordneten Träger (10) zugeordnete Trenneinrichtung (12) in einer vertikalen Ebene liegt, die an das zugeordnete erste Ende jedes der Träger (10) angrenzt, so daß jede der ersten Stützeinrichtungen (70) ferner dazu dient, eine kontinuierliche, anliegende Vorderwand als Anschlag für von dem Träger (10) transportierte Gegenstände zu bilden.

8. Förderer zum Bewegen von Gegenständen von einem Niveau auf ein anderes und auf einer horizontalen Bahn nach Anspruch 8, dadurch gekennzeichnet, daß die jedem der übereinanderliegenden Träger (10) zugeordnete zweite Stützeinrichtung (18) ebenfalls in einer Vertikalebene liegt.

**Revendications**

1. Transporteur destiné à déplacer des articles d'un niveau à un autre ainsi que suivant un trajet horizontal, le transporteur comprenant en combinaison une première paire (22, 20) et une seconde paire (14, 16) de chaînes sans fin disposées sur plusieurs pignons (24, 24A, 26, 26A, 27A, 28A, 29, 34, 36) suivant un trajet fermé comprenant des brins horizontaux et verticaux, une chaîne de chaque paire étant placée d'un côté du trajet et l'autre chaîne de chaque paire étant placée de l'autre côté du trajet, plusieurs organes articulés de transport (10) qui sont distants et formant une surface continue, un premier dispositif de support (70) allant d'un côté du trajet à l'autre et destiné à supporter une première extrémité respective de chacun des organes (10) de transport à surface continue, les extrémités opposées de chacun des premiers dispositifs de support étant raccordées chacune à une chaîne respective de la première paire de chaînes sans fin (20, 22), au moins un élément séparateur (12) ayant une surface continue disposée transversalement audit trajet et dont les extrémités opposées sont supportées par les chaînes (20, 22) de la première paire afin qu'un séparateur articulé soit formé, et un second dispositif de support (18) placé d'un côté du trajet à l'autre et destiné à supporter une seconde extrémité respective de chacun des organes articulés de transport à surface continue, les extrémités opposées de chacun des seconds dispositifs de support (18) étant raccordées chacune à une chaîne respective de la seconde paire de chaînes sans fin (14, 16), le second dispositif de support (18) étant disposé transversalement audit trajet, la disposition étant telle que, lorsque les chaînes de chaque côté du trajet sont adjacentes l'une à l'autre, des organes adjacents de transport à surface continue sont sensiblement coplanaires avec le séparateur et le second dispositif de support correspondant, les séparateurs (12) constituant aussi un organe de butée lorsque les chaînes (14, 16, 20, 22) sont séparées l'une de l'autre et les organes de transport (10) sont placés les uns au-dessus des autres et parallèlement les uns aux autres, le transporteur étant caractérisé en ce que chaque organe de transport à surface continue comprend plusieurs organes contigus de support disposés d'un côté du trajet à l'autre, chaque groupe d'organes contigus de support (50, 52, 54) formant en combinaison un organe articulé de transport (10) à surface continue qui est rigide afin qu'il puisse supporter une charge lorsque l'organe de transport (10) est supporté à ses extrémités, l'élément séparateur (12) ayant une surface continue et étant contigu à la première extrémité antérieure de chaque organe respectif de transport (10), les dispositifs de support (70, 18) étant contigus à l'organe de transport (10), l'espace compris entre des organes adjacents de transport (10) d'une paire d'organes coplanaires distants étant rempli par une paire respective comprenant un élément séparateur (12) et un second dispositif de support (18), les surfaces continues et contiguës de tous les organes de transport (10), des séparateurs (12) et des dispositifs de support (18) formant ainsi une surface continue lorsque les chaînes sont adjacentes l'une à l'autre, si bien que les articles transportés par les organes distants de transport (10) ne peuvent pas tomber entre ces organes, les séparateurs (12) et les seconds dispositifs de support (18) étant destinés à former, avec les organes de transport (10), une surface continue lorsque les chaînes respectives (14, 16, 20, 22) sont adjacentes l'une à l'autre.

2. Transporteur selon la revendication 1, caractérisé en outre en ce que les organes de transport (10) sont supportés suivant la courbe primitive des chaînes (14, 16, 20, 22).

3. Transporteur selon l'une quelconque des revendications précédentes, caractérisé en outre en ce que les organes de transport (10) sont composés d'organes de support (50, 52, 54) à gradins qui sont emboîtés, des tiges (56, 58, 60) raccordant les organes adjacents.

4. Structure selon l'une quelconque des revendications précédentes, caractérisée en outre en ce que les organes de transport (10) ont une double rangée de plaques latérales perpendiculaires (66, 68), chaque plaque latérale étant raccordée à deux organes adjacents (50, 52, 54), chaque rangée étant décalée par rapport à l'autre et étant raccordée à deux tiges adjacentes (56, 58, 60).

5. Transporteur destiné à déplacer des articles d'un niveau à un autre selon l'une quelconque des revendications précédentes, caractérisé en outre en ce que chacun des séparateurs (12) peut pivoter vers le haut en dehors du plan de chaque organe contigu de transport (10) juste avant l'alignement vertical de l'organe contigu de transport (10) avec un autre organe de transport (10), si bien que le séparateur (12) forme une paroi antérieure contiguë au bord antérieur de chaque organe respectif de transport (10), cette paroi étant destinée à retenir les articles transportés par le dispositif de transport (10).

6. Transporteur destiné à déplacer des articles d'un niveau à un autre ainsi que suivant un trajet horizontal selon l'une quelconque des revendications précédentes, caractérisé en outre en ce que les dispositifs adjacents de transport (10), qui sont placés à distance, sont superposés verticalement lorsqu'ils soulèvent des articles et lorsque les chaînes respectives (14, 16, 20, 22) de la première et de la seconde paire sont toutes verticales et séparées les unes des autres.

7. Transporteur destiné à déplacer des articles d'un niveau à un autre ainsi que suivant un trajet horizontal selon la revendication 5, caractérisé en outre en ce que le séparateur respectif (12) de chacun des dispositifs superposés de transport (10) se trouve dans un plan vertical contigu à la première extrémité respective de chacun des dispositifs de transport (10), si bien que chacun des premiers dispositifs de support (70) a une fonction supplémentaire de formation d'une paroi antérieure continue et contiguë destinée à retenir les articles transportés par le dispositif de transport (10).

8. Transporteur destiné à déplacer des articles d'un niveau à un autre ainsi que suivant un trajet horizontal selon la revendication 7, caractérisé en outre en ce que le second dispositif respectif de support (18) de chaque dispositif superposé de transport (10) se trouve aussi dans un plan vertical.

FIG.1.

FIG.2.

FIG. 3.

FIG. 4.

FIG.5.

FIG.6.

FIG.7.

CONTROL    TIMER

FIG.8.